# EUROPÄISCHE PATENTSCHRIFT

(11) **EP 3 695 594 B1**
(45) Veröffentlichungstag und Bekanntmachung des Hinweises auf die Patenterteilung: **31.07.2024**
(21) Anmeldenummer: 18765416.5
(22) Anmeldetag: 03.09.2018
(51) Int. Cl.: G06T 5/94, H04N 5/57

(54) **HELLIGKEIT- UND KONTRASTOPTIMIERUNG VON BILDERN IN ECHTZEIT**
OPTIMIZATION OF CONTRAST AND BRIGHTNESS OF AN IMAGE IN REAL TIME
OPTIMISATION DE CONTRASTE ET DE LUMINOSITÉ D'UNE IMAGE EN TEMPS RÉEL

(30) Priorität: 11.10.2017 DE 102017218072
(43) Veröffentlichungstag der Anmeldung: 19.08.2020
(73) Patentinhaber: Robert Bosch GmbH, 70442 Stuttgart (DE)
(72) Erfinder: GYURASZ, Gabor, 1132 Budapest (HU)
(86) Internationale Anmeldenummer: PCT/EP2018/073609
(87) Internationale Veröffentlichungsnummer: WO 2019/072454

(56) Entgegenhaltungen:
- EP-A2- 1 742 178
- PIZER S M ET AL: "ADAPTIVE HISTOGRAM EQUALIZATION AND ITS VARIATIONS", COMPUTER VISION GRAPHICS AND IMAGE PROCESSING, ACADEMIC PRESS, DULUTH, MA, US, vol. 39, no. 3, 1 September 1987 (1987-09-01), pages 355 - 368, XP001002914
- HWA-HYUN CHO ET AL: "Efficient image enhancement technique by decimation method", IEEE TRANSACTIONS ON CONSUMER ELECTRONICS, vol. 51, no. 2, 1 May 2005 (2005-05-01), NEW YORK, NY, US, pages 654 - 659, XP055529889, ISSN: 0098-3063, DOI: 10.1109/TCE.2005.1468015
- UCHE A. NNOLIM: "Design and Implementation of Gain-Offset Correction Algorithm Hardware Architecture for Grayscale and Color Images Contrast Enhancement", JOURNAL OF CIRCUITS, SYSTEMS AND COMPUTERS., vol. 25, no. 10, 1 October 2016 (2016-10-01), GB, pages 1650120, XP055528454, ISSN: 0218-1266, DOI: 10.1142/S0218126616501206

## Beschreibung

### Stand der Technik

Die vorliegende Erfindung betrifft ein Verfahren zum Aufnehmen eines Bildes. Insbesondere findet in Echtzeit eine Optimierung von Helligkeit und/oder Kontrast des Bildes statt. Des Weiteren betrifft die Erfindung ein Computerprogramm und ein Steuergerät zum Durchführen des Verfahrens.

Aus dem Stand der Technik sind verschiedene Algorithmen bekannt, um Bilder zu optimieren. So ist beispielsweise der AINDANE-Algorithmus aus folgender Veröffentlichung bekannt: "li Tao and Vijayan K. Asari: Adaptive and integrated neighborhood-dependent approach for nonlinear enhancement of colour images, Journal of Electronic Imaging 14(4):043006 - October 2005."

Außerdem ist aus der folgenden Veröffentlichung die SCRCLCE Methode bekannt: "Tsai, C. & Chou, C. J Image Video Proc. (2011) 2011: 6. doi:10.1186/1687-5281-2011-6".

Alle diese Algorithmen und Methoden benötigen jedoch erhebliche Rechenressourcen, um Bilder in Echtzeit zu bearbeiten. Somit werden entsprechend schnell getaktete CPUs (Central Processing Unit) benötigt, die in Desktop-Computern oder Laptop-Computern bereitgestellt sind. Ebenso lassen sich entsprechend schnelle GPUs (Graphics Processing Unit) oder spezialisierte Bildverarbeitungs-Hardware, wie beispielsweise entsprechend konfigurierte FPGAs (Field Programmable Gate Array), verwenden. All diese Technologien sind jedoch üblicherweise in Steuergeräten nicht vorhanden. Bei Steuergeräten handelt es sich insbesondere um eingebettete Systeme (embedded systems), die beispielsweise in Fahrzeugen, Überwachungssystemen, usw., verwendet werden, wobei keine teure Hardware verwendet wird, um die Kosten für das System gering zu halten. Somit ist eine Anwendung der genannten Optimierungsmethoden nicht möglich.

PIZER et al. Adaptative Histogram Equalization and its Variations. COMPUTER VISION, GRAPHICS, AND IMAGE PROCESSING, September 1987, Bd. 39, Nr. 3, Seiten 355-368 offenbart ein Verfahren zur Kontrasterhöhung.

CHO et al. Efficient Image Enhancement Technique by Decimation Method, IEEE Transactions on Consumer Electronics, Mai 2005, Bd. 51, Nr. 2, Seiten 654-659, ISSN: 0098-3063, DOI: 10.1109/ TCE.2005.1468015 offenbart eine Methode zur Bildverbesserung mit einem reduzierten Rechenaufwand, durch die Benutzung einer räumlichen Dezimierung der Bilder.

### Offenbarung der Erfindung

Die Erfindung ist in den unabhängigen Ansprüchen 1, 8, 9 und 10 dargelegt.

Das erfindungsgemäße Verfahren beschreibt einen neuen Ansatz. Das Verfahren kann effektiv auf SIMD (Single Instruction, Multiple Data) Coprozessoren verwendet werden, beispielsweise auf dem ARM NEON Coprozessor. Somit lässt sich das Verfahren optimal auf Mikroprozessoren ausführen. Das Verfahren kann beispielsweise mit 60 Frames pro Sekunde auf ein 8 Bit Graustufenbild mit einer Auflösung von 752 x 640 Pixeln verwendet werden, wobei lediglich die SIMD-Fähigkeiten des ARM NEON Coprozessors benötigt werden und wobei lediglich eine minimale CPU-Belastung eintritt. Das Verfahren kann aber auch auf anderen SIMD-Architekturen verwendet werden.

Das erfindungsgemäße Verfahren zum Aufnehmen eines Bildes umfasst die folgenden Schritte: Zunächst erfolgt ein Erfassen eines Bereichs einer Umgebung mit einem Sensor. Außerdem wird eine Abbildung erzeugt, die eine vordefinierte Anzahl von Pixeln aufweist, wobei die Pixel Helligkeitswerte angeben. Die Abbildung ist somit eine bildliche Repräsentation des erfassten Bereichs der Umgebung. Der Sensor ist insbesondere ein bildgebender Sensor. Anschließend erfolgt ein Unterteilen der Abbildung in Blöcke mit einer vordefinierten ersten Größe. Insbesondere entspricht die vordefinierte erste Größe der Blöcke der Größe solcher Merkmale der Abbildung, die bei der nachfolgenden Bearbeitung beibehalten werden sollen. Danach erfolgt ein Erstellen einer Hilfsabbildung durch Herunterrechnen der Blöcke zu einer vordefinierten zweiten Größe, die kleiner als die erste Größe ist. Hierzu wird insbesondere eine Subsampling-Methode angewandt. Durch das Herunterrechnen wird die Anzahl der Pixel innerhalb der Blöcke reduziert, so dass eine geringere Anzahl an Pixeln zur Verfügung steht, um weitere Bearbeitungsschritte auszuführen. Dies ermöglicht den nachfolgenden Schritt des Sortierens der Pixel jedes Blocks der Hilfsabbildung gemäß deren Helligkeitswerte. Ein solches Sortieren der Pixel ist einfach und aufwandsarm durchführbar. Insbesondere sind hocheffiziente Sortieralgorithmen bekannt, um die Pixel zu sortieren. Durch das Herunterrechnen ist die Anzahl der Pixel reduziert, so dass ein rasches Sortieren durchgeführt werden kann. Insbesondere kann ein solches Sortieren parallel implementiert werden, was erhebliche Vorteile gegenüber bekannten Maßnahmen hat.

Nach dem Sortieren werden Bearbeitungsparameter anhand der sortierten Pixel bestimmt. Mit den Bearbeitungsparametern sind die Pixel jedes Blocks zu bearbeiten, um eine Helligkeitsmaximierung und/oder Kontrastmaximierung zu erreichen. Da das Bestimmen der Parameter somit blockweise erfolgt, erfolgt jeweils ein lokales Optimieren der Helligkeit sowie ein lokales Optimieren des Kontrasts. Somit ist ermöglicht, die Rechenleistung für das Bestimmen der Bearbeitungsparameter zu reduzieren, da die Bearbeitungsparameter stets nur lokal bestimmt werden, nicht jedoch global für das gesamte Bild.

Anschließend erfolgt ein Interpolieren einer Bearbeitungsfunktion aus den Bearbeitungsparametern. Durch die Bearbeitungsfunktion ist ermöglicht, jeden einzelnen Pixel der ursprünglich erfassten Abbildung zu bearbeiten. Somit erfolgt zuletzt ein Anwenden der Bearbeitungsfunktion auf die Pixel der Abbildung. Auf diese Weise wird das Bild erzeugt. Das Bild weist daher eine optimierte Helligkeit sowie einen optimierten Kontrast auf. Dabei kann das gesamte Verfahren in Echtzeit auf einem Mikroprozessor durchgeführt werden, so dass die Optimierung der Helligkeit und/oder des Kontrasts insbesondere auch auf eingebetteten Systemen durchgeführt werden kann. Auf diese Weise lassen sich insbesondere optimale Bilder in Fahrzeugen und/oder Überwachungssystemen und/oder sonstigen integrierten Anwendungen.

Die Unteransprüche haben bevorzugte Weiterbildungen der Erfindung zum Inhalt.

Bevorzugt ist vorgesehen, dass eine vordefinierte Anzahl an maximalen Helligkeitswerten und/oder minimalen Helligkeitswerten bei dem Bestimmen der Bearbeitungsparamater nicht berücksichtigt wird. Durch das Herunterrechnen besteht die Gefahr, dass Ungenauigkeiten in die Hilfsabbildung eingebracht werden. So kann das Herunterrechnen derart geschehen, dass eine vordefinierte Anzahl von Pixeln zu einem einzigen Pixel überführt wird. Dieser einzelne Pixel kann entweder den Durchschnittswert aller Pixel aufweisen oder lediglich den Wert eines einzelnen der zusammenzufassenden Pixel. In erstem Fall wird keine Ungenauigkeit in die Hilfsabbildung eingebracht. In zweitem Fall besteht die Gefahr, dass ein Bildrauschen entsteht. Um das Bildrauschen zu verringern, ist vorgesehen, dass die vordefinierte Anzahl an maximalen Helligkeitswerten und/oder minimalen Helligkeitswerten pro Block nicht berücksichtigt wird. Zum Bestimmen der Bearbeitungsparameter wird in jedem Block nur eine solche Menge von Pixeln verwendet, die keine Randwerte aufweist. Unter Randwerten sind hierbei maximale Helligkeitswerte oder minimale Helligkeitswerte anzusehen. Die Definition der Randwerte erfolgt insbesondere in Abhängigkeit der zu verarbeitenden Pixel. Durch das Nichtberücksichtigen der maximalen Helligkeitswerte und/oder minimalen Helligkeitswerte wird insbesondere ein Quantilfilter definiert.

Vorteilhafterweise ist außerdem vorgesehen, dass als Bearbeitungsparameter für jeden Block der Hilfsabbildung ein Skalierungsfaktor bestimmt wird. Mit dem Skalierungsfaktor ist der maximale Helligkeitswert des Blocks zu skalieren, um einen maximalen Helligkeitswert zu erreichen, der durch einen Pixel darstellbar ist. Somit wird die Helligkeit des Blocks maximiert. Gleichzeit ist sichergestellt, dass keine Sättigung eintritt, wodurch Bildinformationen verloren gehen würden. Daher ist durch die Wahl des Skalierungsfaktors sichergestellt, dass selbst die hellsten Pixel immer noch außerhalb der Sättigung verbleiben. Die weniger hellen Pixel werden durch den Skalierungsfaktor somit maximal aufgehellt.

Ebenso sind als Bearbeitungsparameter für jeden Block vorteilhafterweise ein Offsetwert und ein Multiplikator zu ermitteln. Der Offsetwert wird insbesondere anhand eines geringsten Helligkeitswerts der Pixel des Blocks ermittelt. Der Multiplikator wird bevorzugt anhand der Verteilung der Helligkeitswerte der Pixel des Blocks ermittelt. Auf diese Weise lassen sich die Helligkeitswerte der Pixel jedes Blocks nach Subtraktion des Offsetwerts und anschließender Multiplikation mit dem Multiplikator zwischen einem maximalen Helligkeitswert und einem minimalen Helligkeitswert erstrecken. Der maximale Helligkeitswert und der minimale Helligkeitswert sind solche Extremwerte, die durch den Pixel darstellbar sind. Dies bedeutet, dass ein Kontrast optimiert wird. Insbesondere wird ein maximaler Wertebereich, der durch einen Pixel realisierbar ist, soweit wie möglich ausgenutzt. Dies bedeutet, dass dunklere Pixel maximal abgedunkelt werden, während hellere Pixel maximal aufgehellt werden. Gleichzeitig wird sichergestellt, dass keine Sättigung auftritt, so dass keinerlei Informationsverlust vorhanden ist. Ebenso ist sichergestellt, dass einzelne Pixelwerte nicht verloren gehen, das bedeutet, dass eine Absenkung auf rechnerisch unter Null nicht stattfindet. Somit ist wiederum sichergestellt, dass kein Informationsverlust auftritt.

Bei den zuvor beschriebenen maximalen Helligkeitswerten und/oder minimalen Helligkeitswerten, die durch einen Pixel darstellbar sind, bleibt bevorzugt ein vordefinierter Toleranzbereich unberücksichtigt. Dies bedeutet, dass als maximaler Helligkeitswert eines Pixels nicht der maximale Wert angesehen wird, den ein Pixel annehmen kann, sondern ein Wert, der sich aus dem theoretisch maximal möglichen Wert abzüglich des Toleranzbereichs berechnet. Gleiches gilt für den minimalen Helligkeitswert, der sich aus dem theoretisch minimalen Wert, insbesondere dem Wert Null, zzgl. des Toleranzbereichs berechnet. Auf diese Weise kann sichergestellt werden, dass bei einer weiteren Verarbeitung, insbesondere dem Anwenden der Bearbeitungsfunktion nach Interpolieren der Bearbeitungsparameter, jeder bearbeitete Pixel sicher und zuverlässig innerhalb des darstellbaren Bereichs verbleibt. Somit tritt keine Sättigung ein, wodurch die Gefahr eines Informationsverlusts reduziert ist.

Der Schritt des Interpolierens umfasst vorteilhafterweise eine zweidimensionale abschnittsweise Polynominterpolation. Hierzu wird ein Polynom dritten Grades verwendet. Das Polynom dritten Grades erstreckt sich vorteilhafterweise über jeweils drei benachbarte Bearbeitungsparameter. An Übergangsstellen zwischen zwei Polynomen weisen die Polynome dieselbe Werte und dieselbe erste Ableitung auf. Somit ist die Bearbeitungsfunktion über den gesamten Bereich der Bearbeitungsparameter stetig und differenzierbar. Besonders vorteilhaft erfolgt die Polynominterpolation derart, dass zunächst eine Interpolation in einer Richtung der als Matrix angeordneten Bearbeitungsparameter erfolgt, anschließend eine Interpolation in einer zweiten Richtung. Somit ist die zweidimensionale Interpolation erreicht. Dies bedeutet, dass für jeden Pixel der ursprünglich erstellten Abbildung ein bearbeiteter Pixel des finalen Bildes berechnet werden kann. Hierzu ist lediglich die Koordinate des Pixels in X-Richtung und Y-Richtung benötigt. Besonders vorteilhaft ist die Polynominterpolation ein zweiter Schritt eines zweistufen Interpolationsverfahrens. Dabei erfolgt im ersten Schritt ein bilineares Interpolieren von Pixeln, um einen Pixel zu einem Pixelblock zu erweitern, beispielsweise zu einem 8 x 8-Pixelblock.

Vorteilhafterweise ist vorgesehen, dass die zweite vordefinierte Größe 8 x 8-Pixeln entspricht. Somit muss ein Sortieren lediglich von 64 Pixeln erfolgen. Ein 8 x 8-Pixel-Block kann durch einen aus dem Stand der Technik bekannten bitonic-sorter hocheffizient parallel sortiert werden. Grundsätzlich ist die zweite vordefinierte Größe vorteilhafterweise an die Anzahl der NEON-Register anzupassen. Dies bedeutet, dass ein 8 x 16-Pixel-Block die größte zweite vordefinierte Größe darstellt, die mit herkömmlichen NEON-Architekturen implementiert werden kann. Um ein effizientes Sortieren zu ermöglichen, ist daher vorteilhafterweise vorgesehen, dass die zweite vordefinierte Größe 8 x 8 Pixeln entspricht.

Die Erfindung betrifft außerdem ein Computerprogramm. Das Computerprogramm ist eingerichtet, dass Verfahren wie zuvor beschrieben auszuführen. Das Computerprogramm ist insbesondere ein Computerprogrammprodukt, umfassend Instruktionen, die wenn sie auf einer Rechenvorrichtung ausgeführt werden, den Prozessor veranlassen, die zuvor beschriebenen Schritte des zuvor beschriebenen Verfahrens durchzuführen. Bei dem Prozessor der Rechenvorrichtung handelt es sich insbesondere um den Mikroprozessor eines Steuergeräts.

Außerdem umfasst die Erfindung ein maschinenlesbares Speichermedium. Auf dem maschinenlesbaren Speichermedium ist das zuvor beschriebene Computerprogrammprodukt gespeichert.

Schließlich umfasst die Erfindung ein Steuergerät. Das Steuergerät dient zum Ausführen des zuvor beschriebenen Verfahrens. Somit ist insbesondere vorgesehen, dass das Steuergerät mit einem Sensor zur Signalübertragung gekoppelt ist, um ein Erfassen eines Bereichs zu ermöglichen. Besonders vorteilhaft kann das Steuergerät außerdem das Computerprogramm wie zuvor beschrieben ausführen.

Das zuvor beschriebene Verfahren ist vorteilhafterweise sowohl für Farbbilder als auch für Graustufenbilder geeignet. In jedem Fall ist vorgesehen, dass die Pixel bei Durchführung des oben definierten Verfahrens eine Luminanz eines Farbbilds oder einen Grauwert eines Graustufenbilds angeben. Eine Luminanz des Farbbildes ist für die Durchführung des zuvor beschriebenen Verfahrens nicht relevant und kann daher unberücksichtigt bleiben. Bei den Pixeln handelt es sich vorteilhafterweise um 8 Bit Werte, die die Luminanz und/oder Grauwerte angeben. Bei diesen Werten handelt es sich somit um Helligkeitswerte auf einer Skala zwischen 0 und 255.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:
- Figur 1: eine schematische Abbildung eines Systems zum Durchführen eines Verfahrens gemäß einem Ausführungsbeispiel der Erfindung,
- Figur 2: eine schematische Ansicht eines Ablaufplans des Verfahrens gemäß dem Ausführungsbeispiel der Erfindung,
- Figur 3: eine schematische Repräsentation der sortierten Pixel während des Verfahrens gemäß dem Ausführungsbeispiel der Erfindung,
- Figur 4: eine schematische Repräsentation des Bestimmens von Bearbeitungsparameter gemäß einer ersten Alternative bei Durchführung des Verfahrens gemäß dem Ausführungsbeispiel der Erfindung,
- Figur 5: eine schematische Repräsentation des Bestimmens von Bearbeitungsparametern gemäß einer zweiten Alternative bei Durchführung des Verfahrens gemäß dem Ausführungsbeispiel der Erfindung,
- Figur 6: eine schematische Darstellung einer Richtung einer zweidimensionalen Interpolation bei Durchführung des Verfahrens gemäß dem Ausführungsbeispiel der Erfindung,
- Figur 7: eine weitere schematische Darstellung der einen Richtung der zweidimensionalen Interpolation während der Durchführung des Verfahrens gemäß dem Ausführungsbeispiel der Erfindung, und
- Figur 8: eine schematische Darstellung der zweidimensionalen Interpolation während des Durchführens des Verfahrens gemäß dem Ausführungsbeispiel der Erfindung.

### Ausführungsformen der Erfindung

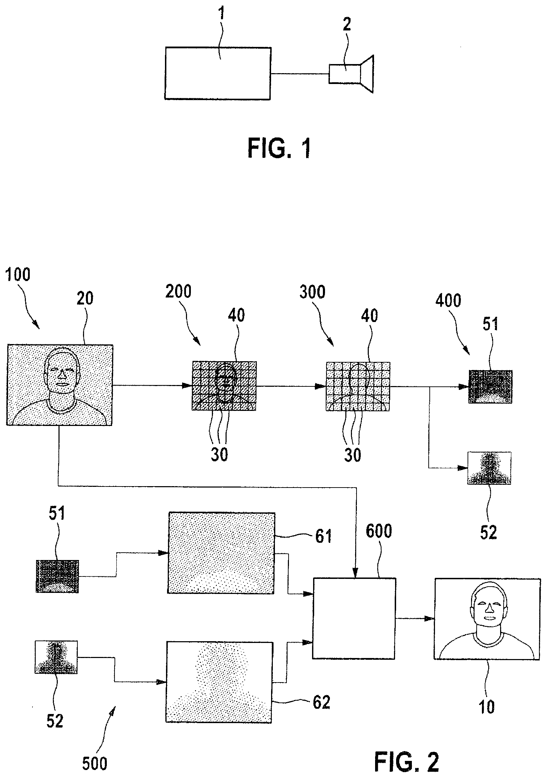

Figur 1 zeigt schematisch ein System zum Durchführen gemäß einem Ausführungsbeispiel der Erfindung. Das System umfasst ein Steuergerät 1 und einen Sensor 2. Auf dem Steuergerät 1 ist das nachfolgend beschriebene Verfahren bevorzugt ausführbar. Das Verfahren dient zum Aufnehmen und Optimieren von Bildern in Echtzeit. Ein Ablaufplan des Verfahrens ist in Figur 2 schematisch dargestellt.

Zunächst erfolgt ein Erfassen 100 eines Bereichs einer Umgebung mit dem Sensor 2. Dabei wird eine Abbildung 20 erzeugt, die eine vordefinierte Anzahl von Pixeln aufweist, die jeweils Helligkeitswerte angeben. Jeder Pixel trägt insbesondere einen 8 bit-Wert, der besagte Helligkeit repräsentiert. Beispielsweise kann die Abbildung 20 eine Auflösung von 752 x 640 Pixeln umfassen.

Die Abbildung 20 wird in Blöcke 30 mit einer vordefinierten ersten Größe unterteilt. Die vordefinierte erste Größe entspricht insbesondere einer solchen Größe, die einzelne Bildmerkmale aufweisen, die in jedem Fall, auch nach der Bearbeitung, vorhanden bleiben sollen. Anschließend erfolgt ein Erstellen 200 einer Hilfsabbildung 40 durch Herunterrechnen der Blöcke 30 zu einer vordefinierten zweiten Größe. Die vordefinierte zweite Größe ist kleiner als die vordefinierte erste Größe und beträgt insbesondere 8 x 8 Pixel.

Anschließend erfolgt ein Sortieren 300 der Pixel jedes Blocks 30 der Hilfsabbildung 40 gemäß deren Helligkeitswerte. Ein solches Sortieren wird insbesondere durch einen bekannten bitonic-sorter-Algorithmus durchgeführt. Besagter bitonic-sorter-Algorithmus kann vorteilhafterweise in einer NEON-Assembler-Sprache mit 64 8-bit Eingangsparametern implementiert werden. Dadurch ist ein hocheffizientes paralleles Sortieren der Pixel pro Block ermöglicht. Somit ist das Sortieren der Pixel in sehr kurzer Zeit durchführbar, wodurch die Echtzeitfähigkeit des Verfahrens gemäß dem Ausführungsbeispiel der Erfindung gewährleistet ist, auch wenn das Verfahren auf einem SIMD-Coprozessor wie dem ARM-NEON Coprozessor durchgeführt wird.

Besagter ARM-NEON Coprozessor ist vorteilhafterweise Teil des Steuergeräts 1 wie zuvor beschrieben.

Der Vorteil des Schritts des Sortierens 300 besteht insbesondere darin, dass lediglich eine begrenzte Anzahl von Pixeln sortiert werden muss. So ist einerseits die Anzahl an insgesamt zu sortierenden Pixeln durch das Herunterrechnen beim Erstellen 200 der Hilfsabbildung 40 verringert, andererseits sind die einzeln zu sortierenden Pixel durch das Unterteilen mittels der Blöcke 30 wiederum reduziert. Gleichzeitig ist ein Vorteil hinsichtlich der Speichernutzung gegeben, da das Sortieren der Pixel keinen zusätzlichen Speicherplatz benötigt. Im Gegensatz dazu würden herkömmliche Optimierungsmethoden, die üblicherweise auf einer Histogrammangleichung beruhen, zusätzlichen Speicherplatz für die Berechnung des Histogramms benötigen.

Anhand der sortierten Pixel erfolgt ein Bestimmen 400 von Bearbeitungsparametern 51, 52, mit denen die Pixel jedes Blocks 30 bearbeitet werden müssen, um eine Helligkeitsmaximierung und/oder Kontrastmaximierung zu erreichen. Insbesondere ist vorgesehen, dass anhand von ersten Bearbeitungsparametern 51 eine Kontrastmaximierung erfolgt, während anhand von zweiten Bearbeitungsparametern 52 eine Helligkeitsmaximierung erfolgt. Somit stehen Bearbeitungsparameter 51, 52 für jeden Block zu Verfügung. Dies bedeutet, dass die Anzahl der Bearbeitungsparameter der Anzahl der Blocks entspricht. Ein Bearbeitungsparameter kann dabei einen einzelnen Bearbeitungsfaktor und/oder mehrere Bearbeitungsfaktoren zum Bearbeiten der Pixel umfassen. Die Bearbeitungsparameter 51, 52 lassen sich jeweils in einer Matrix anordnen. Dabei entspricht die Repräsentation der Bearbeitungsparameter 51, 52 durch die Matrix der Anordnung der Blocks 30 innerhalb der Hilfsabbildung 40. So ist beispielsweise vorgesehen, dass ein Bearbeitungsparameter in einem oberen linken Eck der Matrix dem oberen linken Block 30 der Hilfsabbildung 40 zugeordnet ist. Dies bedeutet, dass die Matrix einzelne Stützpunkte darstellt, die für eine Interpolation verwendet werden können, um eine Bearbeitungsfunktion 61, 62 zu generieren, die für die gesamte Abbildung 20 Gültigkeit hat. Hierzu erfolgt ein Interpolieren 500 der Bearbeitungsfunktion 61, 62 aus Bearbeitungsparametern 51, 52. Das Interpolieren 500 erfolgt insbesondere in zwei Stufen. In einer ersten Stufe erfolgt ein bilineares Interpolieren, wobei bei dem bilinearen Interpolieren einzelne Pixel zu einem 8 x 8 Pixel-Block erweitert werden. Dies lässt sich einfach und aufwandsarm in einer NEON-Assembler-Sprache implementieren. In einer zweiten Stufe erfolgt das Interpolieren der einzelnen Bearbeitungsparameter 51, 52 zu der vordefinierten ersten Größe der Blocks 30. Diese zweite Stufe sollte keine interpolierten Werte generieren, durch die die Grenzen des ursprünglichen Datensatzes, d.h., die Grenzen der Bearbeitungsparameter, überschritten werden. Ansonsten besteht die Gefahr, dass die zuvor beschriebene bilineare Interpolation der ersten Stufe beschädigt wird.

Als letzter Schritt erfolgt ein Anwenden 600 der Bearbeitungsfunktion 61, 62 auf die Pixel der Abbildung 20. Auf diese Weise ist das Bild 10 erstellbar. Dabei ist der gesamte Vorgang zum Erstellen des Bilds 10 echtzeitfähig, wodurch insbesondere ein Echtzeit-Videostream generierbar ist, der hinsichtlich Helligkeit und Kontrast optimiert ist. Für die Bearbeitungsfunktion 61, 62 gilt wiederum, dass bevorzugt eine erste Bearbeitungsfunktion 61 vorhanden ist, durch die ein Kontrast optimierbar ist, während durch eine zweite Bearbeitungsfunktion 62 eine Helligkeit optimierbar ist.

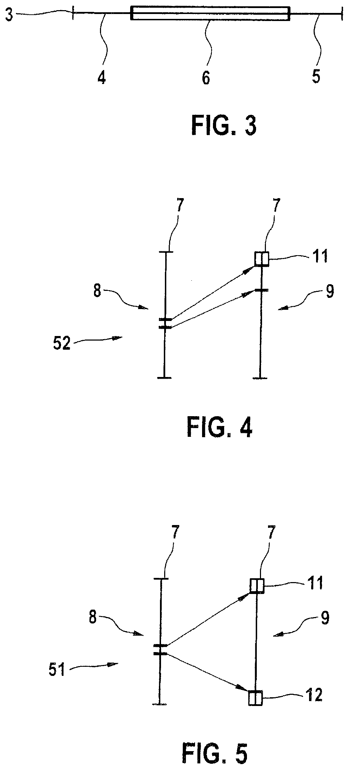

Nachfolgend werden einzelne Aspekte der zuvor beschriebenen Schritte des erfindungsgemäßen Verfahrens mit Bezug auf die Figuren 3 bis 8 einzeln beschrieben.

Das Herunterrechnen beim Erstellen 200 der Hilfsabbildung 40 kann auf unterschiedliche Arten erfolgen. In jedem Fall wird eine vordefinierte Anzahl von Pixeln zu einem einzelnen Pixel vereint. Dieser einzelne Pixel kann entweder den durchschnittlichen Wert aller vereinter Pixel aufweisen oder alternativ den Wert eines einzelnen der zu vereinenden Pixel. In erstem Fall erfolgt kein Einbringen einer Ungenauigkeit in die Hilfsabbildung 40, wobei gleichzeitig ein Rechenaufwand erhöht ist, da der Mittelwert der zu vereinenden Pixel zu berechnen ist. Daher erfolgt vorteilhafterweise die zweite beschriebene Möglichkeit, d.h., ein Zuordnen eines einzelnen Werts aus den zu vereinenden Pixeln zu dem resultierenden Pixel. Da somit eine große Vielzahl von Pixelwerten unberücksichtigt bleibt, besteht die Gefahr, dass ein Bildrauschen in die Hilfsabbildung 40 eingebracht wird. Um ein solches Rauschen zu dämpfen, wird insbesondere für jeden Block 30 eine vordefinierte Anzahl an maximalen Helligkeitswerten 5 und/oder minimalen Helligkeitswerten 4 bei Bestimmung 400 der Bearbeitungsparameter 51, 52 nicht berücksichtigt. Dies ist in Figur 3 dargestellt.

Figur 3 zeigt schematisch eine Repräsentation eines Erstreckungsbereichs 3, über den sich die Helligkeitswerte der Pixel pro Block 30 erstrecken. Zur Ermittlung der Bearbeitungsparameter 51, 52 wird nur ein Mittelbereich 6 verwendet, so dass eine vordefinierte Anzahl von minimalen Helligkeitswerten 4, ebenso wie eine vordefinierte Anzahl von maximalen Helligkeitswerten 5 unberücksichtigt bleibt. Auf diese Weise ist ein Quantilfilter realisiert. Dem mögliche Bildrauschen der Hilfsabbildung 40 kann somit effektiv begegnet werden.

Figur 4 zeigt schematisch das Bestimmen der zweiten Bearbeitungsparameter 52. Dabei sollen die ursprünglichen Pixel 8 zu verbesserten Pixeln 9 bearbeitet werden. In Figur 4 ist jeweils ein maximaler Erstreckungsbereich 7 gezeigt, der einen Wertebereich repräsentiert, den jeder Pixel annehmen kann. Durch die zweiten Bearbeitungsparameter 52 soll eine Helligkeit maximiert werden. Daher wird ein Skalierungsfaktor bestimmt, der zum Skalieren der Helligkeitswerte der Pixel eines jeden Blocks 30 zu verwenden ist. In dem in Figur 4 gezeigten Beispiel weisen die ursprünglichen Pixel 8 einen Helligkeitsverlauf auf, der in einer unteren Hälfte des Erstreckungsbereichs 7 liegt. Anhand des Skalierungsfaktors lässt sich bei den bearbeiteten Pixeln 9 ein Bereich erreichen, der in einem oberen maximalen Bereich des Erstreckungsbereichs 7 liegt. Es bleibt lediglich ein oberer Toleranzbereich 11 unberücksichtigt. Dies bedeutet, dass die Pixel durch den Skalierungsfaktor nicht den maximal möglichen Wert von 255 erreichen können, sondern lediglich einen geringeren Wert.

Der Skalierungsfaktor wird anhand der hellsten Pixel eines jeden Blocks 30 bestimmt. Dazu wird ermittelt, mit welchem Faktor der Wert des hellsten Pixels des Blocks 30 zu multiplizieren ist, um einen Maximalwert, der durch einen Pixel darstellbar ist, insbesondere abzüglich des oberen Toleranzbereichs 11, zu erhalten. Auf diese Weise kann für jeden Block 30 ein Skalierungsfaktor ermittelt werden, um somit die zweiten Bearbeitungsparameter 52 zu erhalten.

Figur 5 zeigt schematisch einen Ansatz zum Bestimmen der ersten Bearbeitungsparamater, die zu einer Kontrastoptimierung führen. Wiederum sind ursprüngliche Pixel 8 vorhanden, die zu verbesserten Pixeln 9 verarbeitet werden sollen. Wiederum erstrecken sich die ursprünglichen Pixel 8 in einen Bereich, der in einer unteren Hälfte des gesamten Erstreckungsbereichs 7 liegt und nur einen sehr geringen Anteil des gesamten Erstreckungsbereichs 7 ausmacht. Somit wird ein Offsetwert und ein Multiplikator ermittelt, wobei der Offsetwert anhand eines geringsten Helligkeitswerts der Pixel des zugehörigen Blocks 30 und der Multiplikator anhand der Verteilung der Helligkeitswerte der Pixel des zugehörigen Blocks 30 ermittelt werden. Auf diese Weise ist ermöglicht, den Bereich, in dem sich die ursprünglichen Pixel 8 erstrecken, auf den gesamten Erstreckungsbereich 7 auszudehnen. Wiederum bleibt ein oberer Toleranzbereich 11 unberücksichtigt. Ebenso bleibt ein unterer Toleranzbereich 12 unberücksichtigt. Somit verteilen sich die Pixel des Blocks 30 über den gesamten Erstreckungsbereich 7, insbesondere abzüglich des oberen Toleranzbereichs 11 und des unteren Toleranzbereichs 12, wodurch der Kontrast des jeweiligen Blocks 30 erhöht ist.

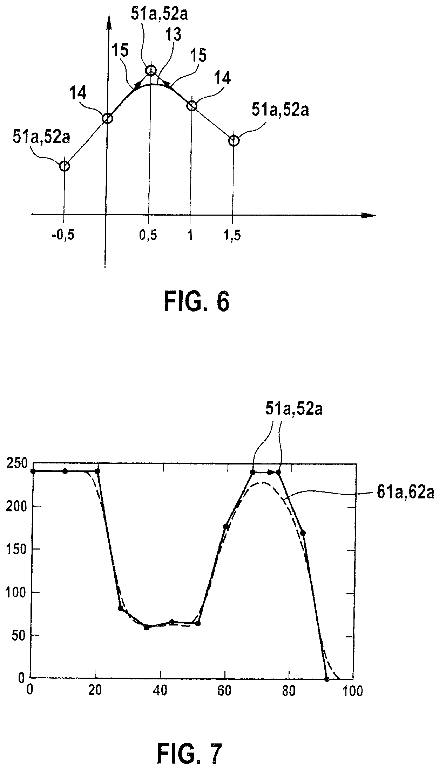

Das Interpolieren 600 erfolgt, insbesondere in der zuvor beschriebenen zweiten Stufe, mittels einer Polynominterpolation, wobei Polynome dritten Grades verwendet werden. Das Interpolieren 500 ist zweistufig, wobei zwischen einer horizontalen Richtung und einer vertikalen Richtung unterschieden wird. Somit lassen sich horizontale Bearbeitungsparameter 51a, 52a ermitteln, die in der Matrix der Bearbeitungsparameter 51, 52 horizontal angeordnet sind. Über diese horizontalen Bearbeitungsparameter 51a, 52a erfolgt ein Interpolieren mittels Polynomen dritten Grades. Das Interpolieren 500 erfolgt dabei abschnittsweise über drei Stützpunkte, das bedeutet abschnittsweise über drei der Bearbeitungsparameter 51a, 52a in horizontaler Richtung. Dabei ist vorgesehen, dass an Übergangsstellen 14 zwischen zwei Polynomen 13, die durch jeweils abschnittsweises Interpolieren ermittelt werden, besagte Polynome 13 denselben Wert und dieselbe erste Ableitung 15 aufweisen. Somit ist insbesondere erreicht, dass die Polynome 13 allesamt eine stetige und differenzierbare Kurve bilden, die sich über sämtliche horizontalen Werte der Bearbeitungsparameter 51a, 52a erstreckt. Dies ist schematisch in Figur 7 gezeigt, wobei in Figur 7 zum Vergleich die horizontalen Bearbeitungsparameter 51a, 52a linear verbunden sind. Aus Figur 7 ist ersichtlich, dass durch das jeweils abschnittsweise über drei Punkte Polynominterpolieren erreicht wird, dass die somit erhaltene horizontale Bearbeitungsfunktion 61a, 62a die ursprüngliche Werte, d.h., die horizontalen Bearbeitungsparameter 51a, 52a, nicht oder nur minimal überschreitet. Durch das Vorsehen von denselben Werten und derselben ersten Ableitung 15 an den Übergangsstellen 14 ist eine stetige und überall differenzierbare Kurve erreicht. Die Übergangsstellen 14 können beispielsweise Zwischenpunkte zwischen zwei Bearbeitungsparametern 51, 52 oder die Bearbeitungsparameter 51, 52 selbst sein.

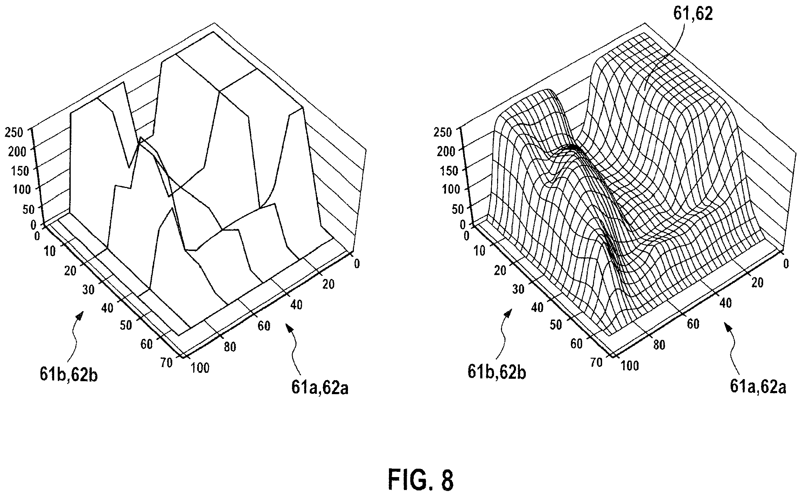

In Figur 8 ist gezeigt, dass nach dem Interpolieren in horizontaler Richtung ein Interpolieren in vertikaler Richtung erfolgt. Somit wird neben der horizontalen Bearbeitungsfunktion 61a, 62a auch eine vertikale Bearbeitungsfunktion 61b, 62b ermittelt. Diese beiden Funktionen werden zusammengeführt, um somit die zweidimensionale Bearbeitungsfunktion 61, 62 zu erhalten. Die Bearbeitungsfunktion 61, 62 kann somit auf jedes einzelne Pixel der Abbildung 20 angewandt werden, um die Helligkeit und/oder den Kontrast zu verbessern.

Durch das Anwenden der Bearbeitungsfunktion 61, 62 auf die Abbildung 20 wird das Bild 10 erhalten. Dabei kann entweder die erste Bearbeitungsfunktion 61 zur Kontrastoptimierung oder die zweite Bearbeitungsfunktion 62 zur Helligkeitsoptimierung oder beide Bearbeitungsfunktionen 61, 62 angewandt werden. Es ist anzumerken, dass die Kontrastoptimierung und die Helligkeitsoptimierung nicht ausschließlich für die jeweils beschriebene Optimierung wirken, sondern die Helligkeitsoptimierung auch den Kontrast und die Kontrastoptimierung auch die Helligkeit verbessern kann. Der Name der jeweiligen Funktionen gibt lediglich an, welcher Effekt hauptsächlich erreicht werden soll.

Im Gegensatz zu der aus dem Stand der Technik bekannten Histogrammangleichung ist somit eine Möglichkeit geschaffen, wie mit einfachen Rechenvorrichtungen ein echzeitfähiges Optimieren von Abbildungen ermöglicht ist. Eine Histogrammangleichung muss somit nicht separat erfolgen. Vielmehr kann durch die zuvor beschriebenen Optimierungen hinsichtlich Helligkeit und Kontrast eine zuverlässige Optimierung in Echtzeit erreicht werden. Die Rechenanforderungen sind dabei sehr gering, so dass ein Durchführen auf einem Mikroprozessor ermöglicht ist.

## Patentansprüche

1. Verfahren zum Aufnehmen und Optimieren von Bildern in Echtzeit, umfassend folgende Schritte:
• Erfassen (100) eines Bereiches mit einem Sensor (2) und Erzeugen einer Abbildung (20) des Bereichs mit einer vordefinieren Anzahl von Pixeln, die Helligkeitswerte angeben, sowie Unterteilen der Abbildung (20) in Blöcke (30) mit einer vordefinierten ersten Größe, und
• Anwenden (600) einer Bearbeitungsfunktion (61, 62) auf die Pixel der Abbildung (20) zum Erzeugen eines Bildes (10),
**dadurch gekennzeichnet, dass** folgende Schritte durchgeführt werden
• Erstellen (200) einer Hilfsabbildung (40) durch Herunterrechnen der Blöcke (30) zu einer vordefinierten zweiten Größe, die kleiner als die vordefinierte erste Größe ist, wobei durch das Herunterrechnen die Anzahl der Pixel innerhalb der Blöcke (30) reduziert wird,
• Sortieren (300) der Pixel jedes heruntergerechneten Blocks (30) der Hilfsabbildung (40) gemäß deren Helligkeitswerte,
• Bestimmen (400) von Bearbeitungsparametern (51, 52) für jeden Block (30) anhand der sortierten Pixel, mit denen die Pixel des zugehörigen Blocks (30) bearbeitet werden müssen, um eine Helligkeitsmaximierung und/oder Kontrastmaximierung zu erreichen, und
• Interpolieren (500) der Bearbeitungsfunktion (61, 62) aus den Bearbeitungsparametern (51, 52), die für die gesamte Abbildung (20) Gültigkeit hat.

2. Verfahren nach Anspruch 1, wobei für jeden Block (30) eine vordefinierte Anzahl an maximalen Helligkeitswerten (5) und/oder minimalen Helligkeitswerten (4) bei dem Bestimmen der Bearbeitungsparameter (51, 52) nicht berücksichtigt wird.

3. Verfahren nach einem der vorhergehenden Ansprüche, wobei als Bearbeitungsparameter (51, 52) für jeden Block (30) der Hilfsabbildung (40) ein Skalierungsfaktor bestimmt wird, mit dem der maximale Helligkeitswert des Blocks (30) zu skalieren ist, um einen maximalen Helligkeitswert zu erreichen, der durch einen Pixel darstellbar ist.

4. Verfahren nach einem der vorhergehenden Ansprüche, wobei als Bearbeitungsparameter (51, 52) für jeden Block (30) ein Offsetwert und ein Multiplikator ermittelt werden, wobei der Offsetwert anhand eines geringsten Helligkeitswerts der Pixel des Blocks (30) und der Multiplikator anhand der Verteilung der Helligkeitswerte der Pixel des Blocks (30) ermittelt werden, sodass sich die Helligkeitswerte der Pixel des Blocks (30) nach Subtraktion des Offsetwerts und anschließender Multiplikation mit dem Multiplikator zwischen einem maximalen Helligkeitswert und einem minimalen Helligkeitswert erstrecken, der durch einen Pixel darstellbar ist.

5. Verfahren nach Anspruch 3 oder 4, wobei für den maximalen Helligkeitswert und/oder minimalen Helligkeitswert, der durch einen Pixel darstellbar ist, ein vordefinierter Toleranzbereich (11, 12) des Pixels unberücksichtigt bleibt.

6. Verfahren nach einem der vorhergehenden Ansprüche, wobei der Schritt des Interpolierens (500) eine zweidimensionale abschnittsweise Polynominterpolation mit jeweils einem Polynom (13) dritten Grades über jeweils drei benachbarte Bearbeitungsparameter (51, 52) umfasst, wobei an jeder Übergangsstelle (14) zwischen zwei Polynomen (13) die Polynome (13) denselben Wert und dieselbe erste Ableitung (15) aufweisen.

7. Verfahren nach einem der vorhergehenden Ansprüche, wobei die zweite vordefinierte Größe 8 x 8 Pixeln entspricht.

8. Computerprogramm, umfassend Befehle, die bei der Ausführung des Programms durch das System des Anspruchs 10 diesen veranlassen, die Schritte des Verfahrens nach einem der vorhergehenden Ansprüche auszuführen.

9. Maschinenlesbares Speichermedium, auf dem das Computerprogramm nach Anspruch 8 gespeichert ist.

10. System mit einem Steuergerät (1) und einem Sensor (2), wobei das System zum Ausführen eines Verfahrens nach einem der Ansprüche 1 bis eingerichtet ist.

## Claims

1. Method for recording and optimizing images in real-time, comprising the following steps:
• sensing (100) a region using a sensor (2) and generating an image representation (20) of the region with a predefined number of pixels that specify brightness values, and dividing the image (20) into blocks (30) of a predefined first size, and
• applying (600) a processing function (61, 62) to the pixels in the image representation (20) for the purpose of generating an image (10),
**characterized in that** the following steps are performed:
• creating (200) an auxiliary image representation (40) by downsampling the blocks (30) to a predefined second size smaller than the predefined first size, the downsampling reducing the number of pixels within the blocks (30),
• sorting (300) the pixels from each downsampled block (30) in the auxiliary image representation (40) according to their brightness values,
• determining (400) processing parameters (51, 52) for each block (30) on the basis of the sorted pixels, by means of which processing parameters the pixels of the associated block (30) must be processed in order to attain a brightness maximization and/or contrast maximization, and
• interpolating (500) the processing function (61, 62) with validity for the entire image representation (20) from the processing parameters (51, 52).

2. Method according to Claim 1, wherein a predefined number of maximal brightness values (5) and/or minimal brightness values (4) for each block (30) are not considered when determining the processing parameters (51, 52).

3. Method according to either of the preceding claims, wherein a scaling factor is determined as processing parameter (51, 52) for each block (30) of the auxiliary image representation (40) and used to scale the maximal brightness value of the block (30) in order to obtain a maximal brightness value representable by a pixel.

4. Method according to any of the preceding claims, wherein an offset value and a multiplier are ascertained as processing parameters (51, 52) for each block (30), with the offset value being ascertained on the basis of a lowest brightness value of the pixels in the block (30) and the multiplier being ascertained on the basis of the distribution of the brightness values of the pixels in the block (30) such that the brightness values of the pixels in the block (30), following the subtraction of the offset value and subsequent multiplication by the multiplier, extend between a maximal brightness value and a minimal brightness value representable by a pixel.

5. Method according to Claim 3 or 4, wherein a predefined tolerance range (11, 12) of the pixel remains unconsidered for the maximal brightness value and/or minimal brightness value representable by a pixel.

6. Method according to any of the preceding claims, wherein the step of interpolation (500) comprises a two-dimensional piecewise polynomial interpolation with in each case a third-degree polynomial (13) over in each case three adjacent processing parameters (51, 52), with the polynomials (13) having the same value and the same first derivative (15) at each transition point (14) between two polynomials (13).

7. Method according to any of the preceding claims, wherein the second predefined size corresponds to 8 x 8 pixels.

8. Computer program comprising instructions which, when the program is executed by the system of Claim 10, cause the latter to carry out the steps of the method according to any of the preceding claims.

9. Machine-readable storage medium on which the computer program according to Claim 8 is stored.

10. System having a controller (1) and a sensor (2), the system being configured to carry out a method according to any of Claims 1 to 7.

## Revendications

1. Procédé de capture et d'optimisation d'images en temps réel, comprenant les étapes suivantes :
• détection (100) d'une zone avec un capteur (2) et génération d'une représentation (20) de la zone avec un nombre prédéfini de pixels qui indiquent des valeurs de luminosité, ainsi que division de l'image (20) en blocs (30) ayant une première taille prédéfinie, et
• application (600) d'une fonction de traitement (61, 62) aux pixels de la représentation (20) en vue de générer une image (10),
**caractérisé en ce que** les étapes suivantes sont exécutées
• création (200) d'une représentation auxiliaire (40) par calcul de réduction des blocs (30) à une deuxième taille prédéfinie, laquelle est inférieure à la première taille prédéfinie, le calcul de réduction réduisant le nombre de pixels à l'intérieur des blocs (30),
• tri (300) des pixels de chaque bloc (30) réduit par calcul de la représentation auxiliaire (40) selon leurs valeurs de luminosité,
• détermination (400) de paramètres de traitement (51, 52) pour chaque bloc (30) à l'aide des pixels triés avec lesquels doivent être traités les pixels du bloc (30) associé afin d'obtenir une maximisation de la luminosité et/ou une maximisation du contraste, et
• interpolation (500), à partir des paramètres de traitement (51, 52), de la fonction de traitement (61, 62) qui est valable pour l'ensemble de la représentation (20).

2. Procédé selon la revendication 1, un nombre prédéfini de valeurs de luminosité maximale (5) et/ou de valeurs de luminosité minimale (4) n'étant, pour chaque bloc (30), pas prises en compte lors de la détermination des paramètres de traitement (51, 52).

3. Procédé selon l'une des revendications précédentes, un facteur d'échelle étant déterminé en tant que paramètre de traitement (51, 52) pour chaque bloc (30) de la représentation auxiliaire (40), avec lequel la valeur de luminosité maximale du bloc (30) doit être mise à l'échelle en vue d'obtenir une valeur de luminosité maximale qui peut être représentée par un pixel.

4. Procédé selon l'une des revendications précédentes, une valeur de décalage et un multiplicateur étant déterminés en tant que paramètres de traitement (51, 52) pour chaque bloc (30), la valeur de décalage étant déterminée à l'aide d'une valeur de luminosité la plus petite des pixels du bloc (30) et le multiplicateur à l'aide de la distribution des valeurs de luminosité des pixels du bloc (30), de sorte que les valeurs de luminosité des pixels du bloc (30), après soustraction de la valeur de décalage et ensuite multiplication par le multiplicateur, s'étendent entre une valeur de luminosité maximale et une valeur de luminosité minimale qui peut être représentée par un pixel.

5. Procédé selon la revendication 3 ou 4, une plage de tolérance prédéfinie (11, 12) du pixel restant non prise en compte pour la valeur de luminosité maximale et/ou la valeur de luminosité minimale qui peut être représentée par un pixel.

6. Procédé selon l'une des revendications précédentes, l'étape d'interpolation (500) comprenant une interpolation polynomiale portion par portion bidimen-sionnelle respectivement avec un polynôme (13) du troisième degré à chaque fois sur trois paramètres de traitement (51, 52) adjacents, les polynômes (13) possédant la même valeur et la même dérivée première (15) à chaque point de transition (14) entre deux polynômes (13).

7. Procédé selon l'une des revendications précédentes, la deuxième taille prédéfinie correspondant à 8 x 8 pixels.

8. Programme informatique, comprenant des instructions qui, lors de l'exécution du programme par le système de la revendication 10, amènent celui-ci à exécuter les étapes du procédé selon l'une des revendications précédentes.

9. Support de stockage lisible par machine, sur lequel est enregistré le programme informatique selon la revendication 8.

10. Système comprenant un contrôleur (1) et un capteur (2), le système étant conçu pour mettre en oeuvre un procédé selon l'une des revendications 1 à 7.
